# EUROPÄISCHE PATENTSCHRIFT

(11) **EP 4 522 782 B1**
(45) Veröffentlichungstag und Bekanntmachung des Hinweises auf die Patenterteilung: **11.03.2026**
(21) Anmeldenummer: 23725653.2
(22) Anmeldetag: 08.05.2023
(51) Int. Cl.: C25B 1/04, C25B 9/05, C25B 15/023, C25B 15/08, F04B 5/00, F04B 5/02, F04B 7/00, F04B 37/18, F04B 39/08

(54) **VORRICHTUNG ZUR BEREITSTELLUNG VON WASSERSTOFF**
DEVICE FOR PROVIDING HYDROGEN
DISPOSITIF POUR FOURNIR DE L'HYDROGÈNE

(30) Priorität: 10.05.2022 AT 503292022
(43) Veröffentlichungstag der Anmeldung: 19.03.2025
(73) Patentinhaber: Hoerbiger Wien GmbH, 1220 Wien (AT)
(72) Erfinder: SPIEGL, Bernhard, 1220 Wien (AT); KORNFELD, Matthias, 1220 Wien (AT)
(74) Vertreter: Patentanwälte Pinter & Weiss OG
(86) Internationale Anmeldenummer: PCT/EP2023/062079
(87) Internationale Veröffentlichungsnummer: WO 2023/217683

(56) Entgegenhaltungen:
- EP-A1- 1 400 692
- EP-A1- 2 067 992
- EP-A1- 3 428 317
- WO-A1-2011/009879
- KR-B1- 102 094 706

## Beschreibung

Die Erfindung betrifft eine Vorrichtung zur Bereitstellung von Wasserstoff, wobei in der Vorrichtung eine Elektrolyseeinheit zur Erzeugung des Wasserstoffs vorgesehen ist. Die Erfindung betrifft zudem ein Verfahren zum Betreiben einer solchen Vorrichtung.

Aufgrund der fortschreitenden Klimaveränderung kommt es zu immer strengeren politischen Vorgaben, was den zulässigen CO2-Ausstoß in die Atmosphäre betrifft. Insbesondere im Verkehr ist man deshalb bestrebt, Alternativen zu den bekannten fossilen Kraftstoffen (Diesel, Benzin, Erdgas, usw.) zu finden. Ein möglicher Weg ist beispielsweise die Verwendung von batteriebetriebenen Fahrzeugen mit elektrischen Antrieben. Dabei wird zuvor erzeugte elektrische Energie in Batterien gespeichert und zum Antrieb von Elektromotoren verwendet. Das Maß an CO2-Reduktion hängt dabei jedoch stark von der Art der Stromerzeugung und auch vom Energieeinsatz für die Herstellung der Batterien ab. Insbesondere für Nutzfahrzeuge ist ein rein batterieelektrischer Betrieb derzeit aber noch nicht wirtschaftlich einsetzbar, was im Wesentlichen am schlechten Verhältnis zwischen Gewicht bzw. Baugröße zu Speicherkapazität liegt. Geeignete Batterien würden folglich zu groß und/oder zu schwer sein, was die Transportkapazität unzulässig einschränken würde.

Eine weitere Möglichkeit ist die Verwendung von Wasserstoff zum Antrieb von Fahrzeugen. Der Wasserstoff kann dabei beispielsweise als Kraftstoff in modifizierten Verbrennungsmotoren verwendet werden oder kann in einer Brennstoffzelle in elektrische Energie umgewandelt werden, welche wiederum zum Antrieb von Elektromotoren verwendet werden kann. Die Speicherung von Wasserstoff kann beispielsweise flüssig in geeigneten Tieftemperaturtanks erfolgen oder gasförmig bei hinreichend hohen Drücken in Druckbehältern. Dadurch ist es bereits möglich, auch bei Nutzfahrzeugen ähnlich hohe Reichweiten realisieren zu können, wie mit bisherigen Antrieben. Zur Erzeugung von Wasserstoff ist die Elektrolyse im Stand der Technik bekannt. Dabei wird Wasser unter Verwendung von elektrischer Energie in Wasserstoff (H₂) und Sauerstoff (O₂) zerlegt. Dabei sind verschiedene Bauarten von Elektrolyseeinheiten, sogenannte Elektrolyseure, bekannt, die sich in ihrer Konstruktion unterscheiden. Am Ausgang einer Elektrolyseeinheit wird (unabhängig von der Bauart) Wasserstoff mit einem bestimmten Druck bereitgestellt.

Es gibt verschiedene Ansätze, um den Wasserstoff am Ausgang des Elektrolyseurs weiterzuverarbeiten. In EP 2 067 992 A1 wird der Wasserstoff mit einem hydraulisch angetriebenen Kolbenkompressor verdichtet und in einem Druckbehälter gespeichert. Der Ausgangsdruck des Kolbenkompressors kann durch Verändern der Pumpgeschwindigkeit einer Pumpe des hydraulischen Antriebs verändert werden. In KR 102 094 706 B1 wird der Wasserstoff aus einem Elektrolyseur in einem Speichertank zwischengespeichert. Von dort kann der Wasserstoff entnommen werden, beispielsweise mit einem Kompressor verdichtet werden. In EP 3 428 317 A1 wird der in einem Elektrolyseur gewonnene Wasserstoff in Speichertanks gespeichert. Die Speichertanks sind als Konstantdruckspeicher ausgeführt, indem in einem Speichertank ein hydraulisch angetriebener Kolben vorgesehen ist, um den Wasserstoff im Speichertank auf ein bestimmtes Druckniveau zu verdichten.

Auch bei der Wasserstofferzeugung hängt die CO₂-Reduktion somit von der Art der Stromerzeugung ab, die zur Versorgung der Elektrolyseeinheit verwendet wird.

Es ist daher besonders vorteilhaft, wenn zur Energieversorgung der Elektrolyseeinheit erneuerbare Energieträger zum Einsatz kommen, beispielsweise Windkraft oder Photovoltaik. Im Gegensatz zu herkömmlichen, insbesondere fossilen Energieträgern, erfolgt die Stromerzeugung dabei in der Regel nicht immer auf einem konstanten Niveau, sondern sie ist stark von den gerade herrschenden Umgebungsbedingungen abhängig. Bei Windkraftanlagen variiert die Stromerzeugung mit der Windstärke, und ist daher naturgemäß nicht konstant. Bei Photovoltaikanlagen variiert die Stromerzeugung mit der Sonnenstrahlung, die z.B. aufgrund von Wolken oder Verschattung in der Regel ebenfalls nicht konstant ist. Wenn die Elektrolyseeinheit direkt an die jeweilige Energiequelle angeschlossen ist, dann schwankt somit auch die elektrische Energieversorgung der Elektrolyseeinheit in Abhängigkeit der Schwankungen der Stromerzeugung der Energiequelle. Eine schwankende Stromversorgung einer Elektrolyseeinheit ist jedoch unerwünscht, weil dies zu Druckschwankungen des erzeugten Wasserstoffs am Ausgang der Elektrolyseeinheit führt. Diese Druckschwankungen wiederum wirken sich negativ auf die Dauerhaltbarkeit und folglich auf die Lebensdauer der Elektrolyseeinheit aus.

Es ist daher eine Aufgabe der Erfindung, eine Vorrichtung zur Bereitstellung von Wasserstoff mittels einer Elektrolyseeinheit bereitzustellen, die auch bei schwankender Energieversorgung der Elektrolyseeinheit eine möglichst hohe Lebensdauer der Elektrolyseeinheit ermöglicht.

Die Aufgabe wird mit der eingangs genannten Vorrichtung dadurch gelöst, dass ein Hubkolbenkompressor zur Verdichtung des von der Elektrolyseeinheit erzeugten Wasserstoffs vorgesehen ist, dass der Hubkolbenkompressor zumindest ein selbsttätiges Saugventil aufweist, dass ein Abhebegreifer vorgesehen ist, um das Saugventil selektiv in einer geöffneten Stellung zu halten, dass ein elektrisch ansteuerbarer Aktuator zur Betätigung des Abhebegreifers vorgesehen ist und dass eine Steuerungseinheit zur Steuerung des Aktuators vorgesehen ist, wobei die Steuerungseinheit dazu ausgebildet ist, den Aktuator derart anzusteuern, dass ein Ausgangsdruck des Wasserstoffs am Ausgang der Elektrolyseeinheit oder ein Differenzdruck zwischen einer Anode und einer Kathode der Elektrolyseeinheit auf einen vorgegebenen Sollwert einstellbar ist. Wenn die Elektrolyseeinheit eine Protonen-Austausch-Membran zwischen der Anode und der Kathode aufweist, dann kann der Differenzdruck ein Differenzdruck an der Protonen-Austausch-Membran sein. Dadurch kann z.B. bei einer schwankenden Energieversorgung der Elektrolyseeinheit, die bisher zu einem schwankenden Ausgangsdruck führte, über die Steuerung des Abhebegreifers relativ rasch ein gewünschter Sollwert des Ausgangsdrucks eingestellt werden.

Als Sollwert kann beispielsweise ein festgelegter Zahlenwert vorgesehen sein oder es kann auch in der Steuerungseinheit eine Funktion zur Ermittlung des Sollwerts in Abhängigkeit zumindest einer weiteren Größe, vorzugsweise der Zeit, hinterlegt sein. Dadurch kann unabhängig von der ggf. schwankenden Energieversorgung ein konstanter Ausgangsdruck oder Differenzdruck eingestellt werden. Alternativ kann auch ein bestimmter zeitlicher Verlauf des Ausgangsdrucks oder des Differenzdrucks eingestellt werden. Dies kann z.B. in vorteilhafter Weise beim Abschalten der Elektrolyseeinheit oder bei einer Unterbrechung der Energieversorgung vorgesehen sein, um den Ausgangsdruck relativ langsam und in kontrollierter Weise auf einen bestimmten Druck zu reduzieren.

Vorzugsweise ist eine Ermittlungseinheit zur Ermittlung eines Istwerts des Ausgangsdrucks oder des Differenzdrucks vorgesehen und die Steuerungseinheit ist dazu ausgebildet, den ermittelten Istwert zur Regelung des Ausgangsdrucks oder des Differenzdrucks auf den vorgegebenen Sollwert zu verwenden. Die Ermittlungseinheit weist vorzugsweise zumindest einen Sensor und/oder ein Berechnungsmodell auf, wobei das Berechnungsmodell vorzugsweise in der Steuerungseinheit hinterlegt ist. Als Sensor kann beispielsweise ein Drucksensor zur Erfassung eines Istwerts des Ausgangsdrucks des Wasserstoffs am Ausgang der Elektrolyseeinheit vorgesehen sein. Der Drucksensor kann dabei in einer Verbindungsleitung angeordnet sein, die den Ausgang der Elektrolyseeinheit mit dem Kolbenkompressor verbindet. Es kann auch ein Differenzdrucksensor zur Erfassung eines Istwerts des Differenzdrucks vorgesehen sein.

Die Steuerungseinheit ist vorzugsweise dazu ausgebildet, aus dem ermittelten Istwert und dem vorgegebenen Sollwert eine Stellgröße für den Aktuator zu ermitteln und den Aktuator mit der ermittelten Stellgröße anzusteuern. Dazu ist es vorteilhaft, wenn die Steuerungseinheit einen geeigneten Regler, beispielsweise Pl-Regler oder PID-Regler, zur Ermittlung der Stellgröße aufweist. Dadurch kann ein geschlossener Regelkreis realisiert werden, wodurch der Ausgangsdruck oder der Differenzdruck sehr genau eingeregelt werden kann.

Zusätzlich oder alternativ kann in der Steuerungseinheit auch eine Funktion zur Ermittlung einer Stellgröße für den Aktuator in Abhängigkeit des vorgegebenen Sollwerts hinterlegt sein und die Steuerungseinheit kann dazu ausgebildet sein, aus der Funktion eine Stellgröße für den Aktuator zu ermitteln und den Aktuator mit der ermittelten Stellgröße anzusteuern. Dadurch kann eine gegenüber der (Feedback-)Regelung einfachere (Feedforward- )Steuerung realisiert werden. Die Funktion kann dabei als bekannt angesehen werden oder kann ggf. aus Versuchen ermittelt werden.

Vorzugsweise ist eine elektrische Energiequelle zur Energieversorgung der Elektrolyseeinheit und/oder des Hubkolbenkompressors vorgesehen. Dadurch kann z.B. eine Energieversorgung der gesamten Vorrichtung durch eine einzige Energiequelle vorgesehen sein. Besonders bevorzugt weist die Energiequelle eine regenerative Energieerzeugungseinrichtung auf, die mit der Elektrolyseeinheit und/oder mit dem Hubkolbenkompressor verbunden ist, wobei die Energieerzeugungseinrichtung vorzugsweise eine Photovoltaikanlage oder eine Windkraftanlage aufweist. Dadurch kann ein erneuerbarer Energieträger zur Erzeugung des Wasserstoffs verwendet werden, was aus ökologischen Gründen vorteilhaft ist. Da die regenerativen Energieerzeugungseinrichtungen aufgrund der Umweltbedingungen in aller Regel eine zeitlich nicht konstante Energie erzeugen die erfindungsgemäße Steuerung bzw. Regelung des Ausgangsdrucks oder des Differenzdrucks besonders vorteilhaft, weil dadurch z.B. Schwankungen schnell und einfach ausgeregelt werden können.

Der Aktuator ist vorzugsweise als pneumatischer, hydraulischer oder elektromagnetischer Aktuator ausgebildet ist. Aufgrund der kurzen Reaktionszeit ist ein elektromagnetischer Aktuator besonders vorteilhaft, um möglichst schnell auf rasche Druckschwankungen reagieren zu können.

Es ist vorteilhaft, wenn das zumindest eine selbsttätige Saugventil als Ringventil ausgebildet ist, wobei das Ringventil vorzugsweise mehrere ringförmige Ventilöffnungen und mehrere ringförmige Ventilelemente aufweist, die vom Abhebegreifer betätigbar sind. Diese Ausführung hat sich bereits bei bisherigen Kompressoren bewährt.

Der Hubkolbenkompressor kann vorzugsweise auch als doppeltwirkender Hubkolbenkompressor und/oder als mehrstufiger Hubkolbenkompressor ausgebildet sein. Durch die Wahl einer geeigneten Ausführung des Hubkolbenkompressors kann die Vorrichtung flexibel an unterschiedliche Rahmenbedingungen angepasst werden.

Die Elektrolyseeinheit kann beispielsweise unmittelbar von einer regenerativen Energieerzeugungseinrichtung mit einer zeitlich nicht konstanten elektrischen Energie versorgt werden und die Steuerungseinheit kann den Ausgangsdruck oder den Differenzdruck auf einen vorgegebenen, beispielsweise konstanten, Sollwert regeln.

Wenn die Elektrolyseeinheit deaktiviert wird oder eine elektrische Energieversorgung der Elektrolyseeinheit unterbrochen wird, dann kann die Steuerungseinheit den Ausgangsdruck beispielsweise auch gemäß einer vorgegebenen Zeitfunktion auf einen festgelegten Wert reduzieren. Dadurch kann der Ausgangsdruck z.B. langsam abgesenkt werden, was für die Dauerfestigkeit der Elektrolyseeinheit vorteilhaft ist.

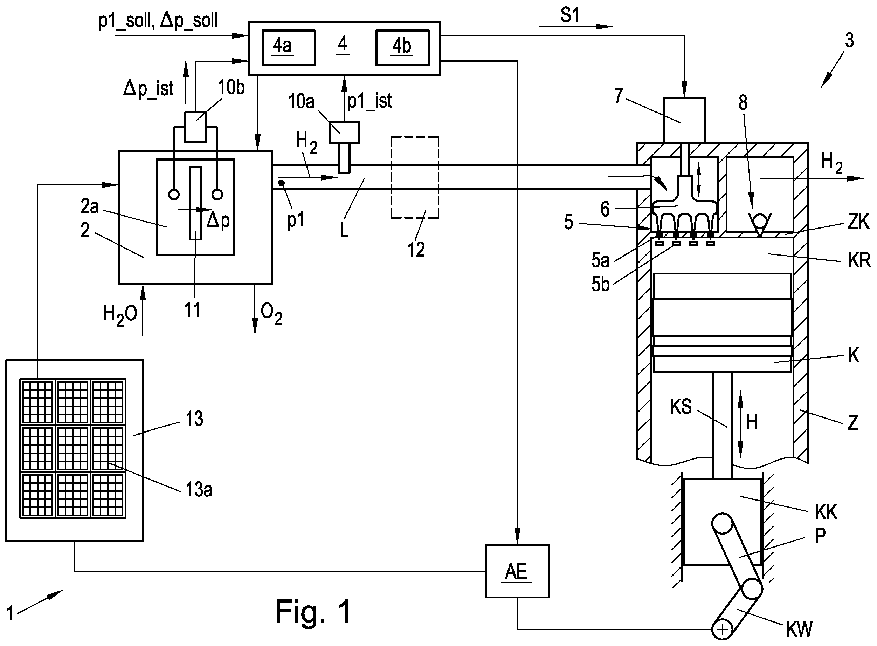

Die gegenständliche Erfindung wird nachfolgend unter Bezugnahme auf Figur 1 näher erläutert, die beispielhaft, schematisch und nicht einschränkend eine vorteilhafte Ausgestaltung der Erfindung zeigt. Dabei zeigt
Fig.1 eine Vorrichtung zur Bereitstellung von Wasserstoff in einer beispielhaften Ausführungsform der Erfindung.

Die in Fig.1 dargestellte Vorrichtung 1 weist eine Elektrolyseeinheit 2 zur Erzeugung von Wasserstoff H₂ und einen Hubkolbenkompressor 3 zur Verdichtung des von der Elektrolyseeinheit 2 erzeugten Wasserstoffs H₂ auf. Weiters ist eine Steuerungseinheit 4 zur Steuerung der Vorrichtung 1 vorgesehen. Die Steuerungseinheit 4 weist eine geeignete Hardware- und/oder Software auf. Solche Steuerungseinheiten 4 sind im Stand der Technik bekannt, weshalb hierzu an dieser Stelle keine nähere Beschreibung erfolgt. In Fig.1 ist die Steuerungseinheit 4 beispielhaft so ausgeführt, dass sie die Elektrolyseeinheit 2 und den Kolbenkompressor 3 steuert. Dies ist jedoch nur beispielhaft zu verstehen und es könnten auch eine separate Elektrolyse-Steuerungseinheit 4a für die Elektrolyseeinheit 2 und eine separate Kompressor-Steuerungseinheit 4b für den Kolbenkompressor 3 vorgesehen sein, wie in Fig.1 angedeutet ist. Die Steuerungseinheiten 4a, 4b können in diesem Fall in geeigneter Weise miteinander kommunizieren, um nachfolgend noch näher beschriebene Sensorsignale und/oder Steuersignale auszutauschen. Grundsätzlich wäre es im Rahmen der Erfindung aber auch ausreichend, wenn lediglich eine Kompressor-Steuerungseinheit 4b zur Steuerung des Kolbenkompressors 3 vorgesehen wäre. Dies hängt im Wesentlichen von der Wahl der nachfolgend noch näher beschriebenen einzustellenden Betriebsgröße der Elektrolyseeinheit 2 ab.

Im dargestellten Beispiel ist eine elektrische Energiequelle 13 zur Energieversorgung der Elektrolyseeinheit 2 und des Hubkolbenkompressors 3 vorgesehen. Die Energiequelle 13 weist hier beispielhaft eine regenerative Energieerzeugungseinrichtung 13a auf, die mit der Elektrolyseeinheit 2 und mit einer Antriebseinheit AE des Hubkolbenkompressors 3 verbunden ist. In einer vorteilhaften Ausführungsform weist die Energieerzeugungseinrichtung 13a beispielsweise eine Photovoltaikanlage auf, wie in Fig.1 angedeutet ist. Alternativ oder zusätzlich könnte die Energieerzeugungseinrichtung 13a auch eine (nicht dargestellte) Windkraftanlage aufweisen oder eine andere geeignete regenerative Energieerzeugungseinrichtung 13a.

Der Aufbau und die Funktion eines Hubkolbenkompressors 3 sind hinlänglich bekannt, weshalb der Hubkolbenkompressors 3 in Fig.1 lediglich schematisch dargestellt ist. In bekannter Weise weist ein Hubkolbenkompressor 3 eine Anzahl von Zylindern Z auf, in denen jeweils ein Kolben K in einer oszillierenden Hub-Bewegung H zwischen einem oberen Totpunkt und einem unteren Totpunkt hin- und her bewegbar ist. In Fig.1 ist beispielhaft ein einziger Zylinder Z dargestellt, natürlich kann der Hubkolbenkompressor 3 aber auch eine Mehrzahl von Zylindern Z aufweisen. Der Antrieb des Kolbens K erfolgt im dargestellten Beispiel über eine Kolbenstangen KS, die mit einem Kreuzkopf KK verbunden ist.

Der Kreuzkopf KK wiederum ist mit einem (schematisch angedeuteten) Kurbeltrieb verbunden. Der Kurbeltrieb weist eine Kurbelwelle KW und je Kolben K ein Pleuel P auf. Die Kurbelwelle KW wird von einer geeigneten Antriebseinrichtung AE, beispielsweise einer elektrischen Maschine, angetrieben. Die Antriebseinrichtung AE wird hier von der gleichen Energiequelle 13 mit elektrischer Energie versorgt, wie die Elektrolyseeinheit 2. Natürlich könnte die Antriebseinrichtung AE des Kolbenkompressors 3 aber auch von einer separaten Energiequelle mit Antriebsenergie versorgt werden. Der Kreuzkopf KK ist über das Pleuel P mit der Kurbelwelle KW verbunden und wird von dieser angetrieben. Der Kreuzkopf stützt die vom Pleuel P erzeugte Seitenkraft am Gehäuse des Hubkolbenkompressor 3 ab, sodass die Kolbenstange KS eine im Wesentlichen reine oszillierende Bewegung durchführt, die möglichst frei von Seitenkräften ist. Der Kolbenkompressor 3 könnte grundsätzlich aber auch ohne Kreuzkopf KK ausgebildet sein, wobei der Antrieb des Kolbens K in diesem Fall direkt über das Pleuel P erfolgt.

Im Zylinder Z ist ein Kompressionsraum KR vorgesehen, der einerseits durch den beweglichen Kolben K begrenzt ist und andererseits durch eine Wandung des Kolbenkompressors 3, beispielsweise durch einen Zylinderkopf ZK. Im Bereich des Kompressionsraums KR sind zumindest ein Saugventil 5 und zumindest ein Druckventil 8 für den Gaswechsel vorgesehen. Entgegen der dargestellten Anordnung könnten einerseits natürlich auch mehrere Saugventile 5 und/oder mehrere Druckventile 8 vorgesehen sein. Auch eine radiale Anordnung am Zylinder Z wäre natürlich möglich. Während eines Expansionshubs des Kolbens K wird das Kompressionsmedium, hier der von der Elektrolyseeinheit 2 erzeugte Wasserstoff H₂, durch das geöffnete Saugventil 5 angesaugt und strömt in den Kompressionsraum KR. Während eines nachfolgenden Kompressionshubs des Kolbens K wird das Kompressionsmedium verdichtet. Wenn ein festgelegter Druck erreicht ist öffnet das Druckventil 8 uns das Kompressionsmedium kann durch das geöffnete Druckventil 8 strömen. Das komprimierte Kompressionsmedium kann danach beispielsweise einem geeigneten (nicht dargestellten) Speicher zugeführt werden oder einem (nicht dargestellten) Verbraucher, z.B. einer Brennstoffzelle.

Der Hubkolbenkompressor 3 weist zumindest ein selbsttätiges Saugventil 5 auf, das aufgrund der Druckverhältnisse während eines Expansionshubs des Kolbens K selbsttätig öffnet und während eines Kompressionshubs des Kolbens K selbsttätig schließt. Es ist somit keine externe Energie für die Ventilbetätigung erforderlich, wie z.B. ein Aktuator. Weiters ist ein Abhebegreifer 6 vorgesehen, mit dem das Saugventil 5 unabhängig von den herrschenden Druckverhältnissen selektiv in einer geöffneten Stellung gehalten werden kann. Das Saugventil 5 ist vorzugsweise als Ringventil ausgebildet, wobei das Ringventil vorzugsweise mehrere ringförmige Ventilöffnungen 5a und mehrere ringförmige Ventilelemente 5b aufweist. Die Ventilelemente 5b dichten die Ventilöffnungen 5a im geschlossenen Zustand des Ringventils 5 ab. Der Abhebegreifer 6 weist in diesem Fall vorzugsweise mehrere Abhebegreiferfinger auf, welche durch die Ventilöffnungen 5a hindurch die Ventilelemente 5b betätigen können. Gattungsgemäße Ringventile sind im Stand der Technik bekannt, weshalb an dieser Stelle keine detailliertere Beschreibung mehr erfolgt.

Weiters ist ein elektrisch ansteuerbarer Aktuator 7 zur Betätigung des Abhebegreifers 6 vorgesehen. Der Aktuator 7 kann beispielswiese als pneumatischer, hydraulischer oder elektromagnetischer Aktuator ausgebildet sein, wobei eine elektromagnetische Betätigung aufgrund der kurzen Schaltzeiten bevorzugt ist. Das Druckventil 8 ist in Fig.1 lediglich schematisch angedeutet und kann beispielsweise, analog wie das Saugventil 5, ebenfalls als selbsttätiges Ventil ausgebildet sein. Die Ventilelemente würden in diesem Fall bei einem bestimmten Druckverhältnis in eine dem Kompressionsraum KR abgewandte Seite öffnen. Alternativ könnte aber natürlich auch ein anderes geeignetes Ventil als Druckventil 8 vorgesehen sein, beispielsweise ein nicht-selbsttätiges Ventil, das von einem geeigneten Aktuator betätigt werden kann.

Der Hubkolbenkompressor 3 kann entgegen der dargestellten Ausführungsform beispielsweise auch als doppeltwirkender Hubkolbenkompressor ausgebildet sein. Dabei ist im Zylinder Z an der, dem Kurbeltrieb abgewandten Seite des Kolbens K ein erster Kompressionsraum KR vorgesehen (so wie in Fig.1 dargestellt) und zusätzlich ist auch an der, dem Kurbeltrieb zugewandten Seite des Kolbens K ein zweiter (nicht dargestellter) Kompressionsraum KR vorgesehen. Am zweiten Kompressionsraum KR sind natürlich wiederum zumindest ein Saugventil und ein Druckventil für den Gaswechsel vorgesehen.

Der Hubkolbenkompressor 3 könnte natürlich auch als mehrstufiger Kompressor ausgebildet sein. Dabei sind mehrere Zylinder Z Kompressionsräumen KR mit unterschiedlichen Verdichtungsverhältnissen vorgesehen. Das Druckventil eines ersten Kompressionsraums wäre hierbei mit dem Saugventil eines nachfolgenden zweiten Kompressionsraums verbunden. Das Kompressionsmedium, hier Wasserstoff H₂, würde dann in mehreren Stufen auf einen gewünschten Enddruck verdichtet werden. Sowohl doppeltwirkende Hubkolbenkompressoren, als auch mehrstufige Kompressoren im Stand der Technik bekannt. Auch eine Kombination von doppeltwirkendem Hubkolbenkompressor und mehrstufigem Kompressor wäre natürlich denkbar. In diesem Fall ist es vorteilhaft, wenn zumindest die an den Ausgang der Elektrolyseeinheit 2 erste Kompressorstufe ein selbsttätiges Saugventil 5 mit Abhebegreifer und Aktuator 7 aufweist.

Die Steuerungseinheit 4 (oder die Kompressor-Steuerungseinheit 4b) ist dazu ausgebildet, den Aktuator 7 derart anzusteuern, dass ein Ausgangsdruck p1 des Wasserstoffs H₂ am Ausgang der Elektrolyseeinheit 2 oder ein Differenzdruck Δp zwischen einer Anode und einer Kathode der Elektrolyseeinheit 2 auf einen vorgegebenen Sollwert einstellbar ist. Wenn die Elektrolyseeinheit 2 einen PEM-Elektrolyseur 2a mit einer Protonen-Austausch-Membran zwischen der Anode und der Kathode aufweist, dann ist der Differenzdruck Δp vorzugsweise ein Differenzdruck Δp an der Protonen-Austausch-Membran 11. Der Hubkolbenkompressor 3 wird im Betrieb der Vorrichtung 1 vorzugsweise mit einer festgelegten konstanten Drehzahl betrieben. Dazu kann die Steuerungseinheit 4 (oder die Kompressor-Steuerungseinheit 4b) die Antriebseinheit AE des Hubkolbenkompressors 3 entsprechend ansteuern.

Vorzugsweise wird ein Sollwert für die Betriebsgröße vorgegeben, beispielsweise ein SollDruck p1_soll für den Wasserstoff H₂ am Ausgang der Elektrolyseeinheit 2 oder eine Soll-Druckdifferenz Δp_soll für den Differenzdruck Δp an der Membran 11. Die Steuerungseinheit 4 kann den vorgegebenen Sollwert zur Steuerung oder zur Regelung des Aktuators 7 verwenden. Dadurch ist es beispielsweise möglich, über die Steuerung des zumindest einen Saugventils 5 durch den Abhebegreifer 6 einen konstanten Ausgangsdruck p1 des Wasserstoffs H₂ am Ausgang der Elektrolyseeinheit 2 oder eine konstante Druckdifferenz Δp an der Membran 11 einzustellen. Dadurch kann auch bei einer schwankenden Energiezufuhr durch die Energiequelle 13, beispielsweise der Photovoltaikanlage 13a, gewährleistet werden, dass der Ausgangsdruck p1 bzw. die Druckdifferenz Δp konstant bleibt. Im Normalfall würde eine schwankende Energiezufuhr zu Druckschwankungen des Ausgangsdrucks p1 führen, was sich jedoch nachteilig auf die Dauerhaltbarkeit der Elektrolyseeinheit 2, insbesondere einer Membran 11 auswirkt, wie eingangs erwähnt wurde.

Der Sollwert kann z.B. ein festgelegter Zahlenwert sein, z.B. ein Soll-Ausgangsdruck p1_soll im Bereich von 15bar bis 40bar oder ein vorgegebene Soll-Differenzdruck Δp_soll. Bei Volllast der Elektrolyseeinheit 2 kann der Soll-Ausgangsdruck p1_soll beispielsweise im Bereich von 30bar betragen. Bei Teillast kann der Soll-Ausgangsdruck p1_soll z.B. im Bereich von 25bar betragen. Weiters kann es auch vorteilhaft sein, den Ausgangsdruck p1 auf einen festgelegten Wert zu halten, nachdem die Elektrolyseeinheit 2 deaktiviert wurde. Das kann vorteilhaft für ein rasches Wiederanfahren der Elektrolyseeinheit 2 sein.

In der Steuerungseinheit 4 kann auch eine Funktion zur Ermittlung des Sollwerts in Abhängigkeit zumindest einer weiteren Größe hinterlegt sein, z.B. in Abhängigkeit der Zeit. Dadurch kann z.B. beim Deaktivieren der Elektrolyseeinheit 2 der Ausgangsdruck p1 in z.B. anhand einer Zeitfunktion in Form einer Rampe, in kontrollierter Weise von einem ersten Wert auf einen zweiten niedrigeren Wert gesenkt werden. Dadurch kann nach dem Abschalten der Elektrolyseeinheit 2 ein abrupter Druckabfall am Ausgang der Elektrolyseeinheit 2 verhindert werden, der sich ggf. nachteilig auf die Dauerhaltbarkeit der Elektrolyseeinheit 2 auswirken könnte.

Um eine (Feedback-)Regelung zu verwirklich ist vorzugsweise eine Ermittlungseinheit zur Ermittlung eines Istwerts p1_ist des Ausgangsdrucks p1 oder ein Istwert Δp_ist des Differenzdrucks Δp vorgesehen. Die Steuerungseinheit 4 ist in diesem Fall vorzugsweise dazu ausgebildet, den ermittelten Istwert zur Regelung des Ausgangsdrucks p1 oder des Differenzdrucks Δp auf den vorgegebenen Sollwert zu verwenden.

Die Ermittlungseinheit kann zumindest einen Sensor und/oder ein Berechnungsmodell aufweisen, wobei das Berechnungsmodell vorzugsweise in der Steuerungseinheit 4 hinterlegt ist. Wie in Fig.1 dargestellt ist, kann beispielsweise ein Drucksensor 10a zur Erfassung eines Istwerts p1_ist des Ausgangsdrucks p1 der Elektrolyseeinheit 2 vorgesehen sein. Der Drucksensor 10a könnte beispielsweise unmittelbar am Ausgang der Elektrolyseeinheit 2 vorgesehen sein und/oder ein Teil der Elektrolyseeinheit 2 sein. Das vom Drucksensor 10a erfasste Drucksignal könnte dann an die Steuerungseinheit 4 übermittelt werden und von dieser zur Regelung des Aktuators 7 verarbeitet werden.

Wenn eine separate Elektrolyse-Steuerungseinheit 4a und eine separate Kompressor-Steuerungseinheit 4b vorgesehen sind, dann könnte das Sensorsignal des Drucksensors 10a z.B. auch an die Elektrolyse-Steuerungseinheit 4a übermittelt werden und von dieser an die Kompressor-Steuerungseinheit 4b übermittelt werden. Auch eine direkte Übermittlung des Sensorsignals an die Kompressor-Steuerungseinheit 4b wäre natürlich möglich. Dies letzte Variante ist insbesondere dann vorteilhaft, wenn eine bestehende Elektrolyseeinheit 2 durch einen Kompressor 3 zur Druckregelung nachgerüstet wird, weil hierbei uU kein Zugriff auf die Elektrolyse-Steuerungseinheit 4a möglich ist.

Wie in Fig.1 dargestellt ist, kann der Ausgang der Elektrolyseeinheit 2 über eine Verbindungsleitung L mit dem Kolbenkompressor 3 verbunden sein, insbesondere mit einer Saugleitung des Kolbenkompressors 3. Der erzeugte Wasserstoff H₂ kann dann dem zumindest einen selbsttätigen Saugventil 5 des Kolbenkompressors 3 über die Verbindungsleitung L zugeführt werden. Der Drucksensor 10a kann dann beispielsweise in der Verbindungsleitung L angeordnet sein. Ggf. können auch noch weitere Einrichtungen 12, beispielsweise Filter, zwischen dem Ausgang der Elektrolyseeinheit 2 und dem Eingang des Kolbenkompressors 3 angeordnet sein, wie in Fig.1 gestrichelt angedeutet ist. Der Drucksensor 10a könnte in diesem Fall in Strömungsrichtung vor dem Filter 12 angeordnet sein oder auch danach. Allgemein ist unter dem Ausgangsdruck p1 im Rahmen der Erfindung ein der Druck an einer beliebigen Stelle in der Verbindungsleitung L zwischen dem Ausgang der Elektrolyseeinheit 2 und dem Eingang des Kolbenkompressors 3 zu verstehen.

Alternativ oder zusätzlich zum Drucksensor 10a kann es auch vorteilhaft sein, wenn ein Differenzdrucksensor 10b zur Erfassung eines Istwerts Δp_ist eines Differenzdrucks Δp an der Membran 11 vorgesehen ist. Dadurch ist es möglich, dass nicht nur der Ausgangsdruck p1 geregelt werden kann, sondern dass beispielsweise ein konstanter Differenzdruck Δp an der Membran 11 eingeregelt werden kann. Dies ist vorteilhaft, weil die Membran 11 des Elektrolyseurs 2a relativ empfindlich gegen zu starke Druckdifferenzen zwischen Anodenseite und Kathodenseite ist. Als Differenzdrucksensor 10b kann entweder ein geeigneter Sensor verwendet werden oder es können auch zwei Drucksensoren verwendet werde, aus deren Differenz der interessierende Differenzdruck Δp ermittelt wird, beispielsweise von der Steuerungseinheit 4.

Alternativ oder zusätzlich zu allfälligen Sensoren könnte die Ermittlungseinheit auch ein Berechnungsmodell zur Ermittlung eines Istwerts aufweisen. Das Berechnungsmodell kann beispielsweise in der Steuerungseinheit 4 hinterlegt sein, z.B. in Form einer mathematischen Funktion, einer Kennlinie oder eines Kennfelds. Das Berechnungsmodell könnte bekannt sein, beispielsweise vom Hersteller der Elektrolyseeinheit 2 vorgegeben sein. Alternativ könnte es z.B. auch empirisch über Versuche ermittelt werden. Über das Berechnungsmodell kann der Istwert p1_ist des Ausgangsdrucks p1 oder der Istwert Δp_ist des Differenzdrucks Δp aus anderen verfügbaren Größen berechnet werden. Es wäre beispielsweise denkbar, dass der Ausgangsdruck p1 des Wasserstoffs H₂ am Ausgang der Elektrolyseeinheit 2 aus einer elektrischen Messgröße ermittelt wird, z.B. aus dem aktuellen elektrischen Strom, der aktuellen elektrischen Spannung oder der aktuellen elektrischen Leistung der Elektrolyseeinheit 2. Die elektrischen Messgrößen können dabei relativ einfach mittels geeigneten Messeinrichtungen erfasst werden.

Die Messeinrichtung zur Erfassung der elektrischen Messgröße (Strom, Spannung, Leistung) könnte beispielsweise in der Elektrolyseeinheit 2 integriert sein, als integraler Bestandteil der der Elektrolyseeinheit 2. Die Messgröße könnte in diesem Fall an die Steuerungseinheit 4 (z.B. die Elektrolyse-Steuerungseinheit 4a) übermittelt werden und von der Steuerungseinheit 4 als Eingangsgröße in das Berechnungsmodell verwendet werden. Als Ausgangsgröße kann die Steuerungseinheit 4 z.B. den Istwert p1_ist des Ausgangsdrucks p1 am Ausgang der Elektrolyseeinheit 2 ermitteln.

Alternativ könnte aber auch eine separate (nicht dargestellte) Messeinrichtung zur Erfassung der elektrischen Messgröße (Strom, Spannung, Leistung) vorgesehen sein, die nicht Teil der Elektrolyseeinheit 2 ist. Die separate Messeinrichtung kann z.B. an einer Versorgungsleitung angeordnet sein, über welche die Elektrolyseeinheit 2 von der Energiequelle 13 mit elektrischer Energie versorgt wird. Die von der separaten Messeinrichtung erfasste Messgröße könnte wiederum an die Steuerungseinheit 4 (in diesem Fall z.B. die Kompressor-Steuerungseinheit 4b) übermittelt werden und von der Steuerungseinheit 4 als Eingangsgröße in das Berechnungsmodell verwendet werden. Die Variante mit der separaten Messeinrichtung kann in vorteilhafter Weise auch für eine Nachrüstung einer bestehenden Elektrolyseeinheit 2 verwendet werden.

Die Steuerungseinheit 4 kann aus dem ermittelten Istwert (beispielsweise dem Istwert p1_ist des Ausgangsdrucks p1 oder dem Istwert Δp_ist des Differenzdrucks Δp) und dem vorgegebenen Sollwert (beispielsweise einem konstanten Sollwert p1_soll des Ausgangsdrucks p1 oder einem konstanten Sollwert Δp_soll des Differenzdrucks Δp) eine geeignete Stellgröße S1 für den Aktuator 7 ermitteln und den Aktuator 7 mit der ermittelten Stellgröße S1 ansteuern. Um die Stellgröße S1 zu ermitteln ist in der Steuerungseinheit 4 vorzugsweise ein geeigneter Regler vorgesehen, z.B. Pl-Regler oder PID-Regler. Die Art der Stellgröße S1 hängt von der konkreten Ausführung des Aktuators 7 ab und kann z.B. ein elektrischer Strom oder eine elektrische Spannung sein. Der Aktuator 7 verstellt dann in Abhängigkeit der Stellgröße S1 den Abhebegreifer 6, vorzugsweise stufenlos, zur Betätigung des Saugventils 5, um den Ausgangsdruck p1 oder den Differenzdruck Δp einzuregeln.

Grundsätzlich muss aber keine (Feedback-)Regelung vorgesehen sein, sondern es könnte auch eine (Feedforward-)Steuerung verwendet werden. In der Steuerungseinheit 4 kann dazu beispielsweise zur Ermittlung einer Stellgröße S1 für den Aktuator 7 eine Funktion der Stellgröße S1 in Abhängigkeit des vorgegebenen Sollwerts hinterlegt sein (z.B. in Abhängigkeit des Sollwerts p1_soll des Ausgangsdrucks p1 oder des Sollwerts des Δp_soll des Differenzdrucks Δp). Die Steuerungseinheit 4 kann dann anhand des Sollwerts aus der Funktion die Stellgröße S1 für den Aktuator 7 ermitteln und den Aktuator 7 mit der ermittelten Stellgröße S1 ansteuern. Die Funktion kann beispielsweise wiederum als mathematische Funktion, als Kennlinie oder Kennfeld in der Steuerungseinheit 4 hinterlegt sein. Die Funktion kann entweder bekannt sein oder es kann z.B. über Versuche eine geeignete Funktion ermittelt werden.

Die Elektrolyseeinheit 2 kann beispielsweise unmittelbar, d.h. ohne dazwischen angeordnete elektrische Verbraucher oder elektrische Speicher, von einer regenerativen Energieerzeugungseinrichtung 13a mit einer zeitlich nicht konstanten elektrischen Energie versorgt werden. Die Steuerungseinheit 4 kann hierbei den Ausgangsdruck p1 oder den Differenzdruck Δp wie beschrieben auf einen vorgegebenen, beispielsweise konstanten, Sollwert regeln. Wenn die Elektrolyseeinheit 2 deaktiviert wird oder eine elektrische Energieversorgung der Elektrolyseeinheit 2 unterbrochen wird, dann kann die Steuerungseinheit 4 den Ausgangsdruck p1 z.B. auch gemäß einer vorgegebenen Zeitfunktion auf einen festgelegten Wert reduzieren. Dadurch kann der Ausgangsdruck p1 beim Abschalten der Elektrolyseeinheit 2 beispielsweise von einem Volllast-Druck von ca. 30bar in kontrollierter Weise innerhalb einer vorgegebenen Zeit auf einen festgelegten geringeren Druck abgesenkt werden. Wenn das Abschalten der Elektrolyseeinheit 2 nur temporär erfolgt, dann könnte der Ausgangsdruck p1 durch eine entsprechende Steuerung des Aktuators 7 beispielsweise auch auf einem relativ hohen Wert gehalten werden, der im Bereich des Ausgangsdrucks p1 vor der Abschaltung liegt.

## Patentansprüche

1. Vorrichtung (1) zur Bereitstellung von Wasserstoff (H₂), wobei in der Vorrichtung (1) eine Elektrolyseeinheit (2) zur Erzeugung von Wasserstoff (H₂) vorgesehen ist, **dadurch gekennzeichnet, dass** ein Hubkolbenkompressor (3) zur Verdichtung des von der Elektrolyseeinheit (2) erzeugten Wasserstoffs (H₂) vorgesehen ist, dass der Hubkolbenkompressor (3) zumindest ein selbsttätiges Saugventil (5) aufweist, **dass** ein Abhebegreifer (6) vorgesehen ist, um das Saugventil (5) selektiv in einer geöffneten Stellung zu halten, **dass** ein elektrisch ansteuerbarer Aktuator (7) zur Betätigung des Abhebegreifers (6) vorgesehen ist **und dass** eine Steuerungseinheit (4) zur Steuerung des Aktuators (7) vorgesehen ist, wobei die Steuerungseinheit (4) dazu ausgebildet ist, den Aktuator (7) derart anzusteuern, dass ein Ausgangsdruck (p1) des Wasserstoffs (H₂) am Ausgang der Elektrolyseeinheit (2) oder ein Differenzdruck (Δp) zwischen einer Anode und einer Kathode der Elektrolyseeinheit (2) auf einen vorgegebenen Sollwert (p1_soll, Δp_soll) einstellbar ist.

2. Vorrichtung (1) nach Anspruch 1, **dadurch gekennzeichnet, dass** die Elektrolyseeinheit (2) eine Protonen-Austausch-Membran (11) zwischen der Anode und der Kathode aufweist und dass der Differenzdruck (Δp) ein Differenzdruck (Δp) an der Protonen-Austausch-Membran (11) ist.

3. Vorrichtung (1) nach Anspruch 1 oder 2, **dadurch gekennzeichnet, dass** der Sollwert (p1_soll, Δp_soll) ein festgelegter Zahlenwert ist oder dass in der Steuerungseinheit (4) eine Funktion zur Ermittlung des Sollwerts (p1_soll, Δp_soll) in Abhängigkeit zumindest einer weiteren Größe, vorzugsweise der Zeit, hinterlegt ist.

4. Vorrichtung (1) nach einem der Ansprüche 1 bis 3, **dadurch gekennzeichnet, dass** eine Ermittlungseinheit zur Ermittlung eines Istwerts (p1_ist, Δp_ist) des Ausgangsdrucks (p1) oder des Differenzdrucks (Δp) vorgesehen ist und dass die Steuerungseinheit (4) dazu ausgebildet ist, den ermittelten Istwert (p1_ist, Δp_ist) zur Regelung des Ausgangsdrucks (p1) oder des Differenzdrucks (Δp) auf den vorgegebenen Sollwert (p1_soll, Δp_soll) zu verwenden.

5. Vorrichtung (1) nach Anspruch 4, **dadurch gekennzeichnet, dass** die Ermittlungseinheit zumindest einen Sensor (10a, 10b) aufweist und/oder dass die Ermittlungseinheit ein Berechnungsmodell aufweist, wobei das Berechnungsmodell vorzugsweise in der Steuerungseinheit (4) hinterlegt ist.

6. Vorrichtung (1) nach Anspruch 4 oder 5, **dadurch gekennzeichnet, dass** der zumindest eine Sensor einen Drucksensor (10a) zur Erfassung eines Istwerts (p1_ist) des Ausgangsdrucks (p1) des Wasserstoffs (H₂) am Ausgang der Elektrolyseeinheit (2) aufweist, wobei der Drucksensor (10a) vorzugsweise in einer Verbindungsleitung (L) angeordnet ist, die den Ausgang der Elektrolyseeinheit (2) mit dem Kolbenkompressor (3) verbindet **und/oder** dass der zumindest eine Sensor einen Differenzdrucksensor (10b) zur Erfassung eines Istwerts (Δp_ist) des Differenzdrucks (Δp) aufweist.

7. Vorrichtung (1) nach einem der Ansprüche 4 bis 6, **dadurch gekennzeichnet, dass** die Steuerungseinheit (4) dazu ausgebildet ist, aus dem ermittelten Istwert (p1_ist, Δp_ist) und dem vorgegebenen Sollwert (p1_soll, Δp_soll) eine Stellgröße (S1) für den Aktuator (7) zu ermitteln und den Aktuator (7) mit der ermittelten Stellgröße (S1) anzusteuern, wobei die Steuerungseinheit (4) vorzugsweise einen Regler, beispielsweise Pl-Regler oder PID-Regler, zur Ermittlung der Stellgröße (S1) aufweist.

8. Vorrichtung (1) nach einem der Ansprüche 1 bis 7, **dadurch gekennzeichnet, dass** in der Steuerungseinheit (4) eine Funktion zur Ermittlung einer Stellgröße (S1) in Abhängigkeit des vorgegebenen Sollwerts (p1_soll, Δp_soll) hinterlegt ist und dass die Steuerungseinheit (4) dazu ausgebildet ist, aus der Funktion eine Stellgröße (S1) für den Aktuator (7) zu ermitteln und den Aktuator (7) mit der ermittelten Stellgröße (S1) anzusteuern.

9. Vorrichtung (1) nach einem der Ansprüche 1 bis 8, **dadurch gekennzeichnet, dass** die elektrische Energiequelle (13) zur Energieversorgung der Elektrolyseeinheit (2) und/oder des Hubkolbenkompressors (3) vorgesehen ist.

10. Vorrichtung (1) nach Anspruch 9, **dadurch gekennzeichnet, dass** die Energiequelle (13) eine regenerative Energieerzeugungseinrichtung (13a) aufweist, die mit der Elektrolyseeinheit (2) und/oder mit der Hubkolbenkompressor (3) verbunden ist, wobei die Energieerzeugungseinrichtung (13a) vorzugsweise eine Photovoltaikanlage oder eine Windkraftanlage aufweist.

11. Verfahren zum Betreiben einer Vorrichtung (1) nach einem der Ansprüche 1 bis 10, **dadurch gekennzeichnet, dass** von der Elektrolyseeinheit (2) Wasserstoff (H₂) erzeugt wird, dass der erzeugte Wasserstoff (H₂) über das zumindest eine Saugventil (5) dem Hubkolbenkompressor (3) zugeführt wird und vom Hubkolbenkompressor (3) verdichtet wird, dass ein Sollwert (p1_soll, Δp_soll) für den Ausgangsdruck (p1) oder für den Differenzdruck (Δp) vorgegeben wird und dass die Steuerungseinheit (4) den Aktuator (7) ansteuert, um den Sollwert (p1_soll, Δp_soll) einzustellen.

12. Verfahren nach Anspruch 11, **dadurch gekennzeichnet, dass** als Sollwert (p1_soll, Δp_soll) ein festgelegter Zahlenwert verwendet wird oder dass der Sollwert (p1_soll, Δp_soll) aus einer Funktion in Abhängigkeit zumindest einer weiteren Größe, vorzugsweise der Zeit, ermittelt wird.

13. Verfahren nach Anspruch 11 oder 12, **dadurch gekennzeichnet, dass** während des Betriebs der Vorrichtung (1) ein Istwert (p1_ist, Δp_ist) des Ausgangsdrucks (p1) oder des Differenzdrucks (Δp) ermittelt wird und dass die Steuerungseinheit (4) aus dem Istwert (p1_ist, Δp_ist) und dem Sollwert eine Stellgröße (S1) für den Aktuator (7) ermittelt und den Aktuator (7) mit der ermittelten Stellgröße (S1) ansteuert, wobei die Stellgröße (S1) von einem Regler, vorzugsweise PI-Regler oder PID-Regler, ermittelt wird.

14. Verfahren nach Anspruch 11 oder 12, **dadurch gekennzeichnet, dass** eine Stellgröße (S1) für den Aktuator (7) aus einer Funktion der Stellgröße (S1) in Abhängigkeit des vorgegebenen Sollwerts (p1_soll, Δp_soll) ermittelt wird und dass die Steuerungseinheit (4) den Aktuator (7) mit der ermittelten Stellgröße (S1) steuert.

15. Verfahren nach einem der Ansprüche 11 bis 14, **dadurch gekennzeichnet, dass** die Elektrolyseeinheit (2) unmittelbar von einer regenerativen Energieerzeugungseinrichtung (13a) mit einer zeitlich nicht konstanten elektrischen Energie versorgt wird und dass die Steuerungseinheit (4) den Ausgangsdruck (p1) oder den Differenzdruck (Δp) auf einen vorgegebenen Sollwert (p1_soll, Δp_soll) regelt.

16. Verfahren nach einem der Ansprüche 11 bis 14, **dadurch gekennzeichnet, dass** die Elektrolyseeinheit (2) deaktiviert wird oder eine elektrische Energieversorgung der Elektrolyseeinheit (2) unterbrochen wird und dass die Steuerungseinheit (4) den Ausgangsdruck (p1) gemäß einer vorgegebenen Zeitfunktion auf einen festgelegten Wert reduziert.

17. Verfahren nach einem der Ansprüche 11 bis 16, **dadurch gekennzeichnet, dass** der Hubkolbenkompressor (3) mit einer festgelegten konstanten Drehzahl betrieben wird.

## Claims

1. A device (1) for providing hydrogen (H₂), wherein an electrolysis unit (2) for producing hydrogen (H₂) is provided in the device (1), **characterized in that** a reciprocating piston compressor (3) for compressing the hydrogen (H₂) produced by the electrolysis unit (2) is provided, that the reciprocating piston compressor (3) has at least one automatic intake valve (5), that a unloader (6) is provided to selectively hold the intake valve (5) in an open position, that an electrically actuable actuator (7) is provided for actuating the unloader (6) and that a control unit (4) is provided for controlling the actuator (7), the control unit (4) being designed to actuate the actuator (7) in such a way that an outlet pressure (p1) of the hydrogen (H₂) at the outlet of the electrolysis unit (2) or a differential pressure (Δp) between an anode and a cathode of the electrolysis unit (2) can be adjusted to a predetermined target value (p1_target, Δp_target).

2. The device (1) according to claim 1, **characterized in that** the electrolysis unit (2) comprises a proton exchange membrane (11) between the anode and the cathode and that the differential pressure (Δp) is a differential pressure (Δp) at the proton exchange membrane (11).

3. The device (1) according to either claim 1 or claim 2, **characterized in that** the target value (p1_target, Δp_target) is a fixed numerical value or that a function for determining the target value (p1_target, Δp_target, Δp_target) on the basis of at least one further variable, preferably time, is stored in the control unit (4).

4. The device (1) according to any one of claims 1 to 3, **characterized in that** a determination unit for determining an actual value (p1_actual, Δp_actual) of the outlet pressure (p1) or the differential pressure (Δp) is provided and that the control unit (4) is designed to use the determined actual value (p1_actual, Δp_actual) to control the outlet pressure (p1) or the differential pressure (Δp) to the predetermined target value (p1_target, Δp_target).

5. The device (1) according to claim 4, **characterized in that** the determination unit has at least one sensor (10a, 10b) and/or that the determination unit has a calculation model, wherein the calculation model is preferably stored in the control unit (4).

6. The device (1) according to either claim 4 or claim 5, **characterized in that** the at least one sensor comprises a pressure sensor (10a) for recording an actual value (p1_actual) of the outlet pressure (p1) of the hydrogen (H₂) at the outlet of the electrolysis unit (2), wherein the pressure sensor (10a) is preferably arranged in a connecting line (L) which connects the outlet of the electrolysis unit (2) to the piston compressor (3) **and/or** that the at least one sensor has a differential pressure sensor (10b) for recording an actual value (Δp_actual) of the differential pressure (Δp).

7. The device (1) according to any one of claims 4 to 6, **characterized in that** the control unit (4) is designed to determine a manipulated variable (S1) for the actuator (7) from the determined actual value (p1_actual, Δp_actual) and the predetermined target value (p1_target, Δp_target) and to actuate the actuator (7) using the determined manipulated variable (S1), wherein the control unit (4) preferably has a controller, for example a PI controller or PID controller, for determining the manipulated variable (S1).

8. The device (1) according to any one of claims 1 to 7, **characterized in that** a function for determining a manipulated variable (S1) on the basis of the predetermined target value (p1_target, Δp_target) is stored in the control unit (4) and that the control unit (4) is designed to determine a manipulated variable (S1) for the actuator (7) from the function and to actuate the actuator (7) using the determined manipulated variable (S1).

9. The device (1) according to any one of claims 1 to 8, **characterized in that** the electrical energy source (13) is provided for supplying energy to the electrolysis unit (2) and/or the reciprocating piston compressor (3).

10. The device (1) according to claim 9, **characterized in that** the energy source (13) comprises a regenerative energy generation apparatus (13a) which is connected to the electrolysis unit (2) and/or to the reciprocating piston compressor (3), wherein the energy generation apparatus (13a) preferably comprises a photovoltaic system or a wind turbine.

11. A method for operating a device (1) according to any one of claims 1 to 10, **characterized in that** hydrogen (H₂) is produced by the electrolysis unit (2), that the hydrogen (H₂) produced is fed to the reciprocating piston compressor (3) via the at least one intake valve (5) and is compressed by the reciprocating piston compressor (3), that a target value (p1_target, Δp_target) is predetermined for the outlet pressure (p1) or for the differential pressure (Δp) and that the control unit (4) actuates the actuator (7) in order to set the target value (p1_target, Δp_target).

12. The method according to claim 11, **characterized in that** a fixed numerical value is used as the target value (p1_target, Δp_target) or that the target value (p1_target, Δp_target) is determined from a function on the basis of at least one further variable, preferably time.

13. The method according to either claim 11 or claim 12, **characterized in that,** during operation of the device (1), an actual value (p1_actual, Δp_actual) of the outlet pressure (p1) or of the differential pressure (Δp) is determined and that the control unit (4) determines a manipulated variable (S1) for the actuator (7) from the actual value (p1_actual, Δp_actual) and the target value and actuates the actuator (7) using the determined manipulated variable (S1), wherein the manipulated variable (S1) is determined by a controller, preferably a PI controller or PID controller.

14. The method according to either claim 11 or claim 12, **characterized in that** a manipulated variable (S1) for the actuator (7) is determined from a function of the manipulated variable (S1) on the basis of the predetermined target value (p1_target, Δp_target) and that the control unit (4) controls the actuator (7) using the determined manipulated variable (S1).

15. The method according to any one of claims 11 to 14, **characterized in that** the electrolysis unit (2) is directly supplied with a temporally non-constant electrical energy by a regenerative energy generation apparatus (13a) and that the control unit (4) controls the outlet pressure (p1) or the differential pressure (Δp) to a predetermined target value (p1_target, Δp_target).

16. The method according to any one of claims 11 to 14, **characterized in that** the electrolysis unit (2) is deactivated or an electrical energy supply to the electrolysis unit (2) is interrupted and that the control unit (4) reduces the outlet pressure (p1) to a specified value in accordance with a predetermined time function.

17. The method according to any one of claims 11 to 16, **characterized in that** the reciprocating piston compressor (3) is operated at a fixed constant speed.

## Revendications

1. Dispositif (1) pour la mise à disposition d'hydrogène (H₂), dans lequel une unité d'électrolyse (2) est prévue dans le dispositif (1) pour la production d'hydrogène (H₂), **caractérisé en ce qu'**un compresseur alternatif à piston (3) est prévu pour comprimer l'hydrogène (H₂) produit par l'unité d'électrolyse (2), **en ce que** le compresseur alternatif à piston (3) présente au moins une soupape d'aspiration (5) automatique, **en ce qu'**un moyen de préhension de levage (6) est prévu pour maintenir sélectivement la soupape d'aspiration (5) dans une position ouverte, **en ce qu'**un actionneur (7) pouvant être commandé électriquement est prévu pour l'actionnement du moyen de préhension de levage (6) **et en ce qu'**une unité de commande (4) est prévue pour la commande de l'actionneur (7), dans lequel l'unité de commande (4) est configurée pour commander l'actionneur (7) de telle sorte qu'une pression de sortie (p1) de l'hydrogène (H₂) à la sortie de l'unité d'électrolyse (2) ou une pression différentielle (Δp) entre une anode et une cathode de l'unité d'électrolyse (2) peut être réglée sur une valeur de consigne (p1_soll, Δp_soll) prédéfinie.

2. Dispositif (1) selon la revendication 1, **caractérisé en ce que** l'unité d'électrolyse (2) présente une membrane échangeuse de protons (11) entre l'anode et la cathode **et en ce que** la pression différentielle (Δp) est une pression différentielle (Δp) au niveau de la membrane échangeuse de protons (11).

3. Dispositif (1) selon la revendication 1 ou 2, **caractérisé en ce que** la valeur de consigne (p1_soll, Δp_soll) est une valeur numérique définie **ou en ce qu'**une fonction pour la détermination de la valeur de consigne (p1_soll, Δp_soll) en fonction d'au moins une autre grandeur, de préférence du temps, est enregistrée dans l'unité de commande (4).

4. Dispositif (1) selon l'une des revendications 1 à 3, **caractérisé en ce qu'**une unité de détermination est prévue pour la détermination d'une valeur réelle (p1_ist, Δp_ist) de la pression de sortie (p1) ou de la pression différentielle (Δp) **et en ce que** l'unité de commande (4) est configurée pour utiliser la valeur réelle (p1_ist, Δp_ist) déterminée pour le réglage de la pression de sortie (p1) ou de la pression différentielle (Δp) sur la valeur de consigne (p1_soll, Δp_soll) prédéfinie.

5. Dispositif (1) selon la revendication 4, **caractérisé en ce que** l'unité de détermination présente au moins un capteur (10a, 10b) **et/ou en ce que** l'unité de détermination présente un modèle de calcul, dans lequel le modèle de calcul est de préférence enregistré dans l'unité de commande (4).

6. Dispositif (1) selon la revendication 4 ou 5, **caractérisé en ce que** l'au moins un capteur présente un capteur de pression (10a) pour la détection d'une valeur réelle (p1_ist) de la pression de sortie (p1) de l'hydrogène (H₂) à la sortie de l'unité d'électrolyse (2), dans lequel le capteur de pression (10a) est de préférence disposé dans une conduite de liaison (L) qui relie la sortie de l'unité d'électrolyse (2) au compresseur à piston (3) **et/ou en ce que** l'au moins un capteur présente un capteur de pression différentielle (10b) pour la détection d'une valeur réelle (Δp_ist) de la pression différentielle (Δp).

7. Dispositif (1) selon l'une des revendications 4 à 6, **caractérisé en ce que** l'unité de commande (4) est configurée pour déterminer, à partir de la valeur réelle (p1_ist, Δp_ist) déterminée et de la valeur de consigne (p1_soll, Δp_soll) prédéfinie, une grandeur de réglage (S1) pour l'actionneur (7) et pour commander l'actionneur (7) avec la grandeur de réglage (S1) déterminée, dans lequel l'unité de commande (4) présente de préférence un régulateur, par exemple un régulateur PI ou un régulateur PID, pour la détermination de la grandeur de réglage (S1).

8. Dispositif (1) selon l'une des revendications 1 à 7, **caractérisé en ce qu'**une fonction pour la détermination d'une grandeur de réglage (S1) en fonction de la valeur de consigne (p1_soll, Δp_soll) prédéfinie est enregistrée dans l'unité de commande (4) **et en ce que** l'unité de commande (4) est configurée pour déterminer, à partir de la fonction, une grandeur de réglage (S1) pour l'actionneur (7) et pour commander l'actionneur (7) avec la grandeur de réglage (S1) déterminée.

9. Dispositif (1) selon l'une des revendications 1 à 8, **caractérisé en ce que** la source d'énergie électrique (13) est prévue pour l'alimentation en énergie de l'unité d'électrolyse (2) et/ou du compresseur alternatif à piston (3).

10. Dispositif (1) selon la revendication 9, **caractérisé en ce que** la source d'énergie (13) comprend un appareil de production d'énergie renouvelable (13a) relié à l'unité d'électrolyse (2) et/ou au compresseur alternatif à piston (3), dans lequel l'appareil de production d'énergie (13a) présente de préférence une installation photovoltaïque ou une éolienne.

11. Procédé permettant de faire fonctionner un dispositif (1) selon l'une des revendications 1 à 10, **caractérisé en ce que** de l'hydrogène (H₂) est produit par l'unité d'électrolyse (2), **en ce que** l'hydrogène (H₂) produit est amené au compresseur alternatif à piston (3) par l'intermédiaire de l'au moins une soupape d'aspiration (5) et est comprimé par le compresseur alternatif à piston (3), **en ce qu'**une valeur de consigne (p1_soll, Δp_soll) est prédéfinie pour la pression de sortie (p1) ou pour la pression différentielle (Δp) **et en ce que** l'unité de commande (4) commande l'actionneur (7) afin de régler la valeur de consigne (p1_soll, Δp_soll).

12. Procédé selon la revendication 11, **caractérisé en ce qu'**est utilisée comme valeur de consigne (p1_soll, Δp_soll) une valeur numérique définie **ou en ce que** la valeur de consigne (p1_soll, Δp_soll) est déterminée à partir d'une fonction en fonction d'au moins une autre grandeur, de préférence du temps.

13. Procédé selon la revendication 11 ou 12, **caractérisé en ce que,** pendant le fonctionnement du dispositif (1), une valeur réelle (p1_ist, Δp_ist) de la pression de sortie (p1) ou de la pression différentielle (Δp) est déterminée **et en ce que** l'unité de commande (4) détermine, à partir de la valeur réelle (p1_ist, Δp_ist) et de la valeur de consigne, une grandeur de réglage (S1) pour l'actionneur (7) et commande l'actionneur (7) avec la grandeur de réglage (S1) déterminée, dans lequel la grandeur de réglage (S1) est déterminée par un régulateur, de préférence un régulateur PI ou un régulateur PID.

14. Procédé selon la revendication 11 ou 12, **caractérisé en ce qu'**une grandeur de réglage (S1) pour l'actionneur (7) est déterminée à partir d'une fonction de la grandeur de réglage (S1) en fonction de la valeur de consigne (p1_soll, Δp_soll) prédéfinie **et en ce que** l'unité de commande (4) commande l'actionneur (7) avec la grandeur de réglage (S1) déterminée.

15. Procédé selon l'une des revendications 11 à 14, **caractérisé en ce que** l'unité d'électrolyse (2) est alimentée directement par un appareil de production d'énergie renouvelable (13a) avec une énergie électrique non constante dans le temps **et en ce que** l'unité de commande (4) régule la pression de sortie (p1) ou la pression différentielle (Δp) à une valeur de consigne (p1_soll, Δp_soll) prédéfinie.

16. Procédé selon l'une des revendications 11 à 14, **caractérisé en ce que** l'unité d'électrolyse (2) est désactivée ou une alimentation en énergie électrique de l'unité d'électrolyse (2) est interrompue **et en ce que** l'unité de commande (4) réduit la pression de sortie (p1) à une valeur définie conformément à une fonction temporelle prédéfinie.

17. Procédé selon l'une des revendications 11 à 16, **caractérisé en ce que** le compresseur alternatif à piston (3) fonctionne avec une vitesse de rotation constante définie.
